# EUROPÄISCHE PATENTANMELDUNG

(11) **EP 0 729 907 A1**
(43) Veröffentlichungstag der Anmeldung: **04.09.1996**
(21) Anmeldenummer: 96102431.2
(22) Anmeldetag: 01.03.1996
(51) Int. Cl.: B65G 47/82, B65H 31/30

(54) **Vorrichtung zum Transport von Blattlagen**

(30) Priorität: 01.03.1995 DE 19507049
(71) Anmelder: E.C.H. WILL GmbH, D-22529 Hamburg (DE)
(72) Erfinder: Wolf, Wolfram, D-25485 Bilsen (DE)
(74) Vertreter: Hiss, Ludwig, Pat. Ass. Dipl.-Ing.

(57) **Zusammenfassung**

Die Erfindung betrifft eine Transportvorrichtung (4) für Blattstapel (2), mit der Gruppen von Blattstapeln (2) quer zu einer Antransportrichtung beschleunigt abgefördert werden.
Es ist das Ziel, eine Formhaltung der Blattstapel (2) zu gewährleisten.
Erreicht wird dies durch einen während der Querförderung (Pfeil 3) durch eine Vakuum-Schleppverbindung (11) in Anlage an der Stapelgruppe (1) synchron mit einem Quertransportband (7) mitbewegten Anschlagschieber (9).

## Beschreibung

Die Erfindung betrifft eine Vorrichtung zum Transport von Blattlagen, mit einem die Blattlagen quer zu ihrer Antransportrichtung abtransportierenden, diskontinuierlich antreibbaren Abfördermittel, auf dem die Blattlagen jeweils eine Gruppe von nebeneinanderliegend angesammelten bzw. beim Abtransport in Förderrichtung hintereinanderliegenden Blattlagen bilden.

Vorrichtungen der eingangs bezeichneten und beispielsweise in der US-PS 4 518 075 offenbarten Gattung werden üblicherweise zum Beispiel überall dort eingesetzt, wo auf mehrbahnigen Produktionsmaschinen durch Längs- und Querschneiden von Papierbahnen kontinuierlich sogenannte Papierriese in Form von Blattlagen oder Blattstapeln gebildet werden, welche von einer Sammelstation jeweils als sogenannter Riesstrang diskontinuierlich in reihenförmiger Formation aus praktisch lückenlos nebeneinanderliegenden Blattlagen, beispielsweise durch ein Zangen-Greifer-System auf ein Quertransportband eines Abförderers überführt und diese Blattlagengruppen bzw. Riesstränge diskontinuierlich nacheinander quer zur Überführungsrichtung, d. h. mit hintereinanderliegenden Blattlagen abtransportiert werden.

Um die bei der diskontinuierlichen Querabförderung einer Blattlagengruppe zur jeweils voreilenden bzw. zuvor abgeförderten Blattlagengruppe entstehende Lücke auf einem sich anschließenden Übergabeförderer zu schließen, wird die jeweils nacheilende quer abgeförderte Blattlagengruppe relativ zur voreilenden Blattlagengruppe beschleunigt, wobei sich die Blattlagen entgegen der Förderrichtung verformen können.

Der Erfindung liegt die Aufgabe zugrunde, die Blattlagen während der Beschleunigungsphase des Quertransportes mit einfachen Mitteln zu stabilisieren.

Diese Aufgabe wird erfindungsgemäß dadurch gelöst, daß dem Abfördermittel ein die Blattlagengruppe in der Quertransportrichtung beaufschlagender und synchron mit dem Abfördermittel mitgeführter Anschlagschieber zugeordnet ist.
Im Sinne der Erfindung könnten beispielsweise Abfördermittel und Anschlagschieber separate, jedoch synchron aktivierbare Antriebsmittel aufweisen. Eine bevorzugte Ausgestaltung besteht hingegen darin, daß der Anschlagschieber eine beim Quertransport am Abfördermittel wirksam werdende bzw. am Ende der Beschleunigungsphase des Quertransports lösbare Schleppverbindung aufweist. Auf diese Weise ist nur noch ein Antriebsmittel für den Quertransport erforderlich.
Gemäß einer Weiterbildung ist die Schleppverbindung als aktivierbare bzw. desaktivierbare Kraftschlußverbindung zwischen Anschlagschieber und Abfördermittel ausgebildet.
Denkbar wäre eine derartige Schleppverbindung beispielsweise in Form eines magnetisierbaren Anschlagschiebers in Verbindung mit einem metallisch beschichteten Abfördermittel oder dergleichen. Eine bevorzugte Ausgestaltung besteht hingegen darin, daß die kraftschlüssige Schleppverbindung an der Unterseite des Anschlagschiebers eingelassene, auf das als luftundurchlässiges Transport band ausgebildete Abfördermittel einwirkende Saugnäpfe umfaßt.
Um jeweils nach einem abgeschlossenen Quertransport von Blattlagen den Anschlagschieber in seine Ausgangsposition zurückzuführen, ist außerdem vorgesehen, daß der Anschlagschieber mit einem Rückstellantrieb versehen ist, welcher zweckmäßigerweise als pneumatischer Stellzylinder ausgebildet ist.

Der mit der Erfindung erzielte Vorteil besteht darin, daß während der gesamten Beschleunigungsphase ein Gegenhalter einen engen Kontakt mit der Stapelaußenseite hält und damit die Formhaltung der Blattstapel gewährleistet, wobei die Realisierung besonders einfach durch die kraftschlüssige Zwangsmitnahme des Gegenhalters durch das Abfördermittel ist.

Die Erfindung wird nachstehend anhand des in den beigefügten Abbildungen dargestellten Ausführungsbeispiels näher erläutert.

Hierbei zeigen:
- Figur 1: eine Quertransportvorrichtung für Blattstapel in der Seitenansicht,
- Figur 2: die Ausgangsstellung der Quertransportvorrichtung in der Draufsicht und
- Figur 3: die Endstellung der Quertransportvorrichtung in der Draufsicht.

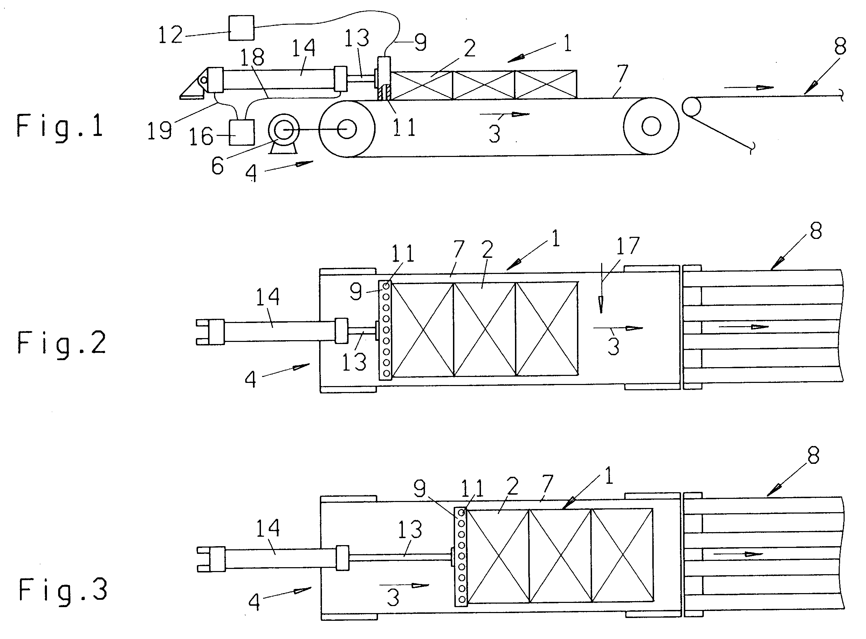

Die in Figur 1 dargestellte Quertransportvorrichtung dient zum diskontinuierlichen Abtransport jeweils einer Gruppe 1 von nebeneinanderliegenden, sich aus zahlreichen Blattlagen zusammensetzenden Blattstapeln 2 in Richtung des Pfeils 3. Auf einem zu diesem Zweck vorgesehenen Abfördermittel 4 in Form eines durch einen Antriebsmotor 6 diskontinuierlich antreibbaren, luftundurchlässigen Transportbandes 7 werden die Blattstapel 2 zuvor senkrecht zur Zeichenebene angesammelt. An das Abfördermittel 4 schließt sich auf bekannte Weise ein aus mehreren parallelen Bändern bestehendes Übergabeförermittel 8 an, auf das die in Pfeilrichtung 3 quer abgeförderten Blattstapel 2 übergeben werden.
Das Abfördermittel 4 umfaßt darüber hinaus einen mit dem Transportband 7 zusammenwirkenden Anschlagschieber 9, welcher mit dem Transportband 7 eine aktivierbare bzw. desaktivierbare kraftschlüssige Schleppverbindung bildet. Zu diesem Zweck ist der Anschlagschieber 9 an seiner dem Transportband 7 zugewandten Unterseite mit Saugnäpfen 11 versehen, die mit einem Saugdüsensteuerorgan 12 in Verbindung stehen.
Der Anschlagschieber 9 befindet sich am Ende einer Kolbenstange 13 eines pneumatischen Stellzylinders 14, der über ein Ventilorgan 16 in nachfolgend beschriebener Weise ansteuerbar ist.
Vor Aktivierung des Quertransports in Richtung des Pfeils 3 nehmen die Blattstapel 2 eine Position gemäß Figur 2 mit stirnseitiger Anlage am Anschlagschieber 9 ein, in die sie zuvor in Richtung des Pfeils 17 überführt wurden. Ausgelöst durch das Steuerorgan 12 liegt an den Saugnäpfen 11 Vakuum an, welches den Anschlagschieber 9 kraftschlüssig mit der Oberfläche des Transportbandes 7 verbindet und auf diese Weise eine Schleppverbindung herstellt.
Anschließend wird das Transportband 7 aus dem Stillstand in Richtung des Pfeils 3 beschleunigt und der Anschlagschieber 9 unter Anlage an der Blattstapelgruppe 1 durch die Schleppverbindung synchron mitbewegt, wobei die rechte Kammerseite des Stellzylinders 14 über eine Leitung 18 durch das Ventilorgan 16 mit der Atmosphäre verbunden ist. Auf diese Weise behalten die beschleunigt quer abgeförderten Blattstapel 2 ihre rechtwinklige Ausrichtung und Formation bei.
In der am Ende der Beschleunigungsphase des Transportbandes 7 erreichten Endstellung des Anschlagschiebers 9 gemäß Figur 3 wird der an den Saugnäpfen 11 anliegende Unterdruck aufgehoben und damit die Schleppverbindung unterbrochen. Durch Belüften der rechten Kammerseite und Entlüften der linken Kammerseite des Stellzylinders 14 über die Leitungen 18 bzw. 19 wird der Anschlagschieber 9 anschließend in seine Ausgangsstellung gemäß Figur 2 zurückbewegt.

## Patentansprüche

1. Vorrichtung zum Transport von Blattlagen, mit einem die Blattlagen quer zu ihrer Antransportrichtung abtransportierenden, diskontinuierlich antreibbaren Abfördermittel, auf dem die Blattlagen jeweils eine Gruppe von nebeneinanderliegend angesammelten bzw. beim Abtransport in Förderrichtung hintereinanderliegenden Blattlagen bilden, dadurch gekennzeichnet, daß dem Abfördermittel (4) ein die Blattlagengruppe (1) in der Quertransportrichtung (Pfeil 3) beaufschlagender und synchron mit dem Abfördermittel mitgeführter Anschlagschieber (9) zugeordnet ist.

2. Vorrichtung nach Anspruch 1, dadurch gekennzeichnet, daß der Anschlagschieber (9) eine beim Quertransport am Abfördermittel (4) wirksam werdende bzw. am Ende der Beschleunigungsphase des Quertransports lösbare Schleppverbindung aufweist.

3. Vorrichtung nach Anspruch 1 oder 2, dadurch gekennzeichnet, daß die Schleppverbindung als aktivierbare bzw. desaktivierbare Kraftschlußverbindung zwischen Anschlagschieber (9) und Abfördermittel (4) ausgebildet ist.

4. Vorrichtung nach einem der Ansprüche 1 bis 3, dadurch gekennzeichnet, daß die kraftschlüssige Schleppverbindung an der Unterseite des Anschlagschiebers (9) eingelassene, auf das als luftundurchlässiges Transportband (7) ausgebildete Abfördermittel (4) einwirkende Saugnäpfe (11) umfaßt.

5. Vorrichtung nach einem der Ansprüche 1 bis 4, dadurch gekennzeichnet, daß der Anschlagschieber (9) mit einem Rückstellantrieb (14) versehen ist.

6. Vorrichtung nach Anspruch 5, dadurch gekennzeichnet, daß der Rückstellantrieb (14) als pneumatischer Stellzylinder ausgebildet ist.
